# FASCICULE DE BREVET EUROPEEN

(11) **EP 2 698 739 B1**
(45) Date de publication et mention de la délivrance du brevet: **02.12.2015**
(21) Numéro de dépôt: 13180040.1
(22) Date de dépôt: 12.08.2013
(51) Int. Cl.: G06F 21/52

(54) **Procédé de gestion dynamique de codes associés à des contremesures sécuritaires, produit programme d'ordinateur et dispositif correspondants**
Verfahren zur dynamischen Verwaltung von Codes, die mit Sicherheitsgegenmaßnahmen assoziiert sind, entsprechendes Computerprogrammprodukt und entsprechende Vorrichtung
Method for dynamic management of codes associated with security countermeasures, corresponding computer program product and device

(30) Priorité: 16.08.2012 FR 1257835
(43) Date de publication de la demande: 19.02.2014
(73) Titulaire: Oberthur Technologies, 92700 Colombes (FR)
(72) Inventeur: Giraud, Christophe, 92700 COLOMBES (FR); Barbu, Guillaume, 92700 COLOMBES (FR); Andouard, Philippe, 92700 COCLOMBES (FR)
(74) Mandataire: Orsini, Fabienne

(56) Documents cités:
- EP-A1- 2 196 934
- B. ROBISSON ET AL: "Management of the security in smart secure devices", SMART SYSTEMS INTEGRATION, DRESDEN, 22 - 23 MARCH 2011, 23 mars 2011 (2011-03-23), XP055064434, Germany ISBN: 978-3-80-073324-8

## Description

### 1. DOMAINE DE L'INVENTION

Le domaine de l'invention est celui de la sécurité des composants électroniques.

Plus précisément, l'invention concerne une technique pouvant être mise en oeuvre lorsqu'un composant électronique est soumis à des attaques par injection de fautes, ou à tout autre type d'attaques détectables.

L'invention a de nombreuses applications, telles que par exemple dans le domaine des cartes à puces.

### 2. ARRIÈRE-PLAN TECHNOLOGIQUE

On s'attache plus particulièrement dans la suite de ce document à décrire la problématique existant dans le domaine des cartes à puce, à laquelle ont été confrontés les inventeurs de la présente demande de brevet. L'invention ne se limite bien sûr pas à ce domaine particulier d'application, mais présente un intérêt pour toute technique de gestion dynamique de la sécurité devant faire face à une problématique proche ou similaire.

Traditionnellement, les cartes à puce comprennent de nombreuses contremesures logicielles et/ou matérielles destinées à parer les attaques par canaux cachés. De telles contremesures sont exécutées et/ou sont opérationnelles dès que la carte à puce est mise sous tension.

Ainsi, une carte à puce comprend généralement des contremesures sécuritaires vis-à-vis des attaques par injection de fautes. En effet, de telles attaques, qui visent à perturber physiquement un composant électronique de la carte à puce, via un laser par exemple, afin de modifier soit le code qui est en train de s'exécuter, soit la valeur des variables qui sont manipulées, sont particulièrement efficaces lorsqu'elles sont réalisées sur des cartes à puces non sécurisées.

Cependant, l'implémentation de contremesures sécuritaires (comme la contremesure consistant à réaliser une redondance des opérations, la vérification de l'intégrité des variables manipulées, etc....) se fait au détriment d'autres facteurs. En effet, lorsque de telles contremesures sécuritaires sont mises en oeuvre, une application exécutée sur une carte à puce voit ses performances aussi bien en termes de temps d'exécution qu'en termes de consommation mémoire, dégradée.

Ainsi, un utilisateur quelconque, ne possédant aucune velléité de mettre en oeuvre des attaques par injection de fautes, se voit pénalisé par la mise en oeuvre des contremesures sécuritaires. En effet, l'impact des contre-mesures peut facilement augmenter de 50% le temps nécessaire à l'exécution d'une application ce qui est un gros inconvénient lorsqu'il s'agit d'une application de transport ou de paiement par exemple.

Le document EP 2196934 décrit une machine virtuelle configurée pour reconnaître, en plus d'un ensemble de bytecodes conventionnels, au moins un bytecode sécuritaire fonctionnellement équivalent à l'un des bytecodes conventionnels. Elle est configurée pour traiter les bytecodes sécuritaires avec une sécurité accrue, alors qu'elle est configurée pour traiter les bytecodes conventionnels avec une vitesse accrue.

### 3. OBJECTIFS DE L'INVENTION

L'invention, dans au moins un mode de réalisation, a notamment pour objectif de proposer une technique permettant d'offrir une sécurité dynamique.

Plus précisément, dans au moins un mode de réalisation de l'invention, un objectif est de fournir une technique permettant de gérer l'activation de contremesures sécuritaires de manière modulaire.

Dans au moins un mode de réalisation de l'invention, un objectif est de fournir une technique qui permette d'adapter la sécurité d'un composant électronique à une capacité estimée d'un adversaire.

Plus précisément, dans au moins un mode de réalisation de l'invention, un objectif est de fournir une technique permettant d'obtenir un compromis optimal entre les exigences de performance des logiciels exécutés sur des composants électroniques, et les exigences liées à la sécurité des données comprises dans de tels composants électroniques.

### 4. EXPOSÉ DE L'INVENTION

Dans un mode de réalisation particulier de l'invention, il est proposé un procédé de gestion, mis en oeuvre dans un composant électronique, de codes associés à des contremesures sécuritaires. Un tel procédé est remarquable en qu'une exécution desdits codes est réalisée de manière dynamique en fonction d'au moins un paramètre lié à une détection d'au moins une attaque par un dispositif de détection.

Le principe général de l'invention consiste donc à conditionner l'activation de contremesures sécuritaires (et plus précisément l'exécution d'instructions de codes correspondant à une fonction sécuritaire) à la détection d'une attaque du composant électronique (par attaque, on entend tout type d'action visant à contribuer à l'obtention de données confidentielles; ainsi, une action consistant à décapsuler un composant électronique, ou à sonder (« *probing* » en anglais) des parties du composant électronique sont des attaques détectables via le dispositif de détection). Ainsi, une telle technique permet de gérer l'activation/l'exécution de contremesures sécuritaires de manière dynamique et modulaire.

Ainsi, contrairement aux techniques de l'état de l'art qui consistent à activer/exécuter toutes les contremesures dès la mise sous tension d'une carte à puce, la présente technique vise à conditionner l'activation ou la désactivation de contremesures sécuritaires par rapport à un paramètre dont la valeur est fonction par exemple d'un nombre représentatif de l'occurrence d'attaques par injection de fautes détectées.

Le composant électronique exécute donc une gestion dynamique de la sécurité, au sens où il réalise une réelle gestion de l'exécution ou non de codes associés à des contremesures sécuritaires, contrairement aux solutions de l'état de la technique.

Un tel procédé ne doit pas être confondu avec la technique consistant à rajouter un code dans un logiciel et à exécuter celui-ci lorsqu'une modification d'un pointeur d'instruction (ou « *program counter* » en anglais), résultant d'une attaque par injection de fautes, et induisant un saut vers un tel code, se produit. En effet, une telle technique ne peut pas être assimilable à un procédé de gestion, car le composant électronique (via un logiciel de contrôle ou de supervision) ne gère pas de manière effective l'activation de contremesures. Il n'y a pas de réelle gestion effective de l'exécution de code dans ce cas de figure. De plus, les contremesures sécuritaires correspondant aux codes exécutés selon la présente technique ne visent pas à rendre le composant électronique inutilisable. En effet, le composant électronique reste fonctionnel suite à la détection d'une attaque ou plusieurs attaques et à l'exécution de codes associés à des contremesures sécuritaires.

Selon une caractéristique particulière, un tel procédé est remarquable en ce que ledit paramètre est compris dans une mémoire non-volatile, et en ce que ledit composant vérifie régulièrement un état dudit paramètre.

Ainsi, en vérifiant la valeur d'un tel paramètre en mémoire, notamment lors de la mise sous tension du composant électronique, il est possible de maintenir un niveau de sécurité attendu. Une fois que le paramètre lié à une détection d'au moins une attaque par un dispositif de détection est instancié en mémoire non-volatile, les codes associés à des contremesures sécuritaires sont exécutés immédiatement et ils seront désormais toujours exécutés, quand bien même le composant électronique est mis hors-tension. Ainsi, le niveau de sécurité du composant électronique est pérenne dans le temps.

Selon une caractéristique particulière, un tel procédé est remarquable en ce que lesdits codes associés à des contremesures sécuritaires sont classifiées en une pluralité de groupes, chaque groupe étant associé à un niveau de sécurité permettant de hiérarchiser lesdits groupes les uns par rapport aux autres.

Selon une caractéristique particulière, un tel procédé est remarquable en ce qu'une exécution des codes compris dans un groupe possédant le niveau de sécurité le plus faible est toujours mise en oeuvre par ledit composant électronique.

Selon une caractéristique particulière, un tel procédé est remarquable en ce qu'une exécution desdits codes compris dans un groupe d'un niveau de sécurité donné est mise en oeuvre en fonction du nombre d'attaques détectées par ledit dispositif de détection.

Selon une caractéristique particulière, un tel procédé est remarquable en ce qu'une exécution desdits codes est réalisée de manière crescendo par rapport aux niveaux de sécurité, en fonction d'un nombre d'attaques détectées.

Selon une caractéristique particulière, le procédé est mis en oeuvre par une machine virtuelle comprise dans ledit composant électronique, et lesdits codes correspondent à des instructions associées à des codes intermédiaires spécifiques, non standards.

Selon une caractéristique particulière, un tel procédé est mis en oeuvre par une machine virtuelle comprise dans ledit composant électronique, et lesdits codes correspondent à des instructions sécurisées associées à des codes intermédiaires standards.

Selon une caractéristique particulière, lesdits codes intermédiaires appartiennent au groupe comprenant : - des p-codes ; - des bytecodes ; et - des code objets.

Selon une caractéristique particulière, lesdits codes sont inhibés par défaut par des balises.

Selon une caractéristique particulière, le dispositif de détection comprend un circuit comprenant des moyens de détection de lumière.

Ainsi, en utilisant des moyens de détection de lumière tels qu'une pluralité de capteurs de lumière disposé selon une topologie différente pour chaque composant électronique, il est possible de détecter des photons provenant d'un rayonnement laser visant à perturber le comportement du composant électronique. Un paramètre interne du composant électronique est alors modifié, et une telle modification induit un changement du comportement du procédé de gestion de codes. De plus, de tels capteurs permettent aussi de détecter des attaques consistant à décapsuler et sonder des parties du composant électronique. Ainsi, les attaques décrites dans l'article « *Probing Atatcks on Tamper-Resistant Devices* » de H. Handschuh et al., publié dans les annales de la conférence CHES 99, peuvent être détectées de cette manière, et la sécurité du composant électronique peut être renforcée suite à la détection de telles attaques.

Selon une caractéristique particulière, le dispositif de détection comprend un circuit comprenant des moyens de détection de variation de température.

Selon une caractéristique particulière, le dispositif de détection comprend un circuit comprenant des moyens de détection de variation d'une fréquence d'une horloge.

Selon une caractéristique particulière, le dispositif de détection comprend un circuit comprenant des moyens de contrôle du flux d'exécution de codes sur ledit composant électronique.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé un composant électronique comportant des moyens adaptés à la mise en oeuvre du procédé précité (dans l'un quelconque de ses différents modes de réalisation).

Plus précisément, selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un module relais selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), un élément de sécurité (ou « *secure element* » en anglais) utilisé dans le contexte de communication en champ proche (pour « *Near Field Communication* » en anglais), etc.

Dans un autre mode de réalisation de l'invention, il est proposé un dispositif de gestion de codes associés à des contremesures sécuritaires. Un tel dispositif est remarquable en ce qu'une exécution desdits codes est réalisée de manière dynamique en fonction d'au moins un paramètre lié à une détection d'au moins une attaque par un dispositif de détection.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente l'architecture simplifiée d'un microcontrôleur selon l'état de la technique tel qu'utilisé dans une carte à puce possédant une interface de communication duale (ou « dual interface » en anglais), et comprenant un réseau de capteurs de lumière ;
- la figure 2 présente, de manière schématique, un mode de réalisation de l'invention appliquée au contexte Java Card ;
- la figure 3 présente, de manière schématique, un autre mode de réalisation de l'invention appliquée au contexte Java Card.

### 6. DESCRIPTION DÉTAILLÉE

Sur toutes les figures du présent document, les éléments et étapes identiques sont désignés par une même référence numérique.

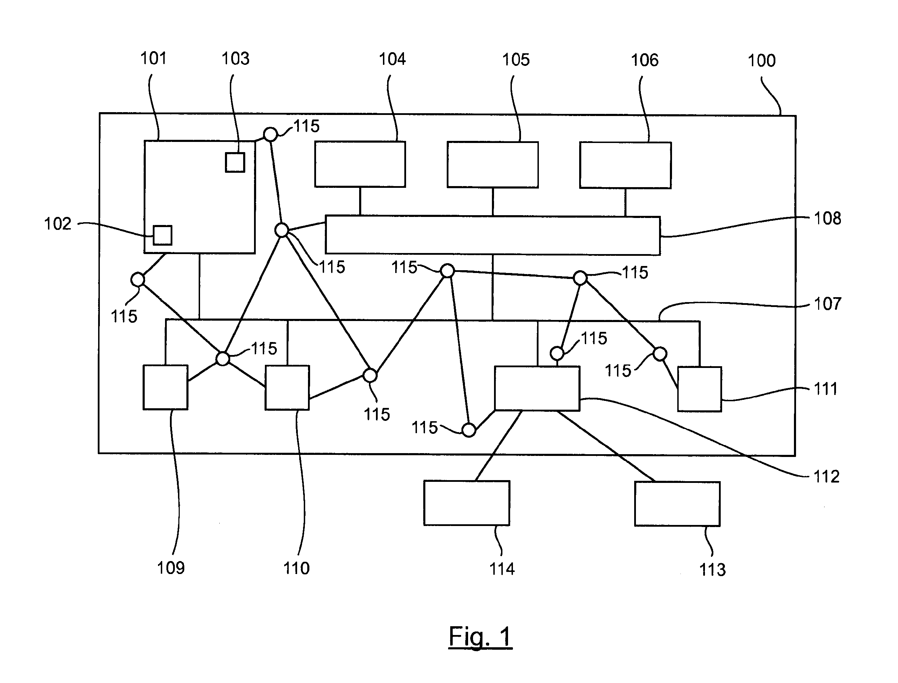

La figure 1 présente l'architecture simplifiée d'un microcontrôleur selon l'état de la technique tel qu'utilisé dans une carte à puce possédant une interface de communication duale (ou « *dual interface* » en anglais), et comprenant un réseau de capteurs de lumière.

Le microcontrôleur 100 comprend :
- une unité de calcul 101 (ou CPU, pour « *Central Processing Unit* » en anglais) dans laquelle se trouve une unité arithmétique et logique 102 (ou ALU, pour « *Arithmetic Logic Unit* » en anglais) abrégée par l'acronyme UAL, ainsi qu'un ou plusieurs registres de travail 103;
- une mémoire vive 104 (ou RAM, pour « *Random Access Memory* » en anglais), dans laquelle des résultats intermédiaires peuvent être stockés temporairement lors de l'exécution des instructions d'un programme d'ordinateur ;
- une mémoire morte 105 (ou ROM, pour « *Read Only Memory* » en anglais) dans laquelle, entre autres, des programmes d'ordinateur sont stockés. Ces programmes sont exécutés par l'unité de calcul 101;
- une mémoire particulière 106 qui correspond soit à une mémoire morte effaçable électriquement et programmable (appelée une mémoire EEPROM, pour « *Electrically-Erasable Programmable Read-Only Memory* ») ou soit à une mémoire flash ;
- des bus de transfert 107 de données utilisés pour permettre le transfert de données entre les différents éléments matériels compris dans le microcontrôleur ;
- une unité de contrôle sécuritaire 108 qui effectue des contrôles sur les données transférées ;
- des coprocesseurs cryptographiques 109 (par exemple un coprocesseur DES, AES, et un coprocesseur cryptographique dédié à la réalisation d'opérations arithmétiques modulaire) ;
- une unité 110 de génération de nombres aléatoires ;
- une unité 111 d'alimentation, de réinitialisation, et de contrôle de l'horloge ;
- une unité 112 constituant une interface d'entrées-sorties pour permettre au microcontrôleur de communiquer avec d'autres dispositifs. Notamment, cette unité est mise en relation avec une antenne 113 (afin de réaliser des communications en mode sans-contacts, selon la norme ISO/IEC 14443 type A ou B) et un port série 114 (afin de réaliser des communications en mode « contact » selon la norme ISO 7816).

Il convient de noter que le réseau de capteurs 115 est assimilable à un dispositif de détection permettant de détecter qu'une attaque par injection de fautes a été réalisée.

En effet, le réseau de capteurs 115 (disposés selon une topologie particulière) étant capable de détecter des photons, il permet de transmettre une information à un logiciel (par exemple un système d'exploitation (« *Operating System (OS)* » en anglais), ou une machine virtuelle qui sont exécutés par le microcontrôleur 100) relative à une attaque par injection de fautes.

De manière classique, lorsqu'une telle information est détectée, le microcontrôleur 100 entre dans un état inactif. Il ne peut plus alors être utilisé par un utilisateur. Cette action ne peut pas être qualifiée de contremesure sécuritaire au sens de la présente invention, car le microcontrôleur 100 est alors inutilisable.

La présente technique consistant en un procédé de gestion dynamique de la sécurité d'un microcontrôleur 100, vise à offrir une alternative à ce type de solution.

Dans un mode de réalisation de l'invention, il est proposé de classifier les contremesures implémentées généralement par un microcontrôleur 100 (telle une carte à puce) en une pluralité de groupes, chaque groupe correspondant à un niveau de sécurité, permettant de hiérarchiser les contremesures, et de déterminer les contremesures qui doivent être toujours mises en oeuvre (de telles contremesures peuvent être qualifiées de vitales). Par exemple, dans un mode de réalisation de l'invention, il se peut que seulement 10% de l'intégralité des contre-mesures implémentées classiquement soient vitales. Ainsi, les contremesures correspondantes sont incluses dans un même groupe, ayant pour niveau de sécurité la valeur 1. Les autres contremesures sont elles aussi réparties dans différents autres groupes. Par exemple, dans des groupes ayant des niveaux de sécurité égal à 2, 3, ou 4. Plus le niveau de sécurité est élevé, et plus la résistance à des attaques par injection de fautes est forte.

La présente technique permet d'augmenter (de manière linéaire ou non) dynamiquement la sécurité du microcontrôleur 100 vis-à-vis des attaques par injection de fautes, au fur et à mesure du nombre d'attaques détectées (via la gestion d'un ou plusieurs drapeaux (ou « flag » en anglais) en mémoire non-volatile). Dans un mode de réalisation de l'invention, par défaut, seules les contre-mesures contre les attaques par injection d'ordre 1 sont activées (i.e. ces contremesures permettent de résister à des attaques injectant une seule perturbation par commande) lors de la mise sous tension du microcontrôleur 100. Ce type de contre-mesures consiste principalement à doubler les tests/opérations sensibles et à comparer les deux résultats correspondants. Si de telles contre-mesures détectent une attaque, alors le composant électronique peut alors activer/exécuter les contre-mesures permettant de se prémunir contre les attaques d'ordre supérieur (i.e. les attaques pouvant injecter n perturbations par commande). Ces contre-mesures consistent principalement à rajouter n redondances sur les tests/opérations sensible à protéger et à tester la cohérence des sorties respectives des opérations. Ainsi, en fonction de la valeur d'un paramètre présent en mémoire non-volatile, le microcontrôleur 100 est capable de déterminer et d'atteindre un niveau de sécurité donné, lorsqu'il est redémarré.

Une autre manière de concevoir les différents groupes de contre-mesures qui s'activeront les uns après les autres consiste à les grouper suivant le niveau de sécurité du bien qu'elles protègent. Par exemple dans le cadre d'une application MasterCard, les biens primaires sont le PIN (pour « *Personal identification number* », en anglais, ou Numéro d'identification personnel, en français) ainsi que les clés DES et RSA, les biens secondaires sont le PTC (pour « *Pin Try Counter* » en anglais) et le CRM (pour « *Card Risk Management* » en anglais) par exemple. Dans un tel mode de réalisation, le microcontrôleur 100 exécute par défaut les contre-mesures protégeant les biens primaires, stockés dans des parties de la mémoire non-volatile du microcontrôleur 100, puis en cas de détection d'une attaque par injection de fautes, les contre-mesures protégeant les biens secondaires, stockés eux-aussi dans des parties de la mémoire non-volatile du microcontrôleur 100, sont exécutées.

Dans une variante de l'invention, on peut associer des ensembles de biens à différents groupes de contre-mesures visant à protéger ces ensembles de biens.

Dans une autre variante de l'invention, le microcontrôleur 100 peut diminuer le niveau de sécurité dans lequel il se trouve, lorsque celui-ci n'a pas détecté d'attaques depuis un certain temps ou depuis un certain nombre d'exécutions d'une application, ces valeurs étant définies pour empêcher un attaquant de facilement diminuer le niveau de sécurité.

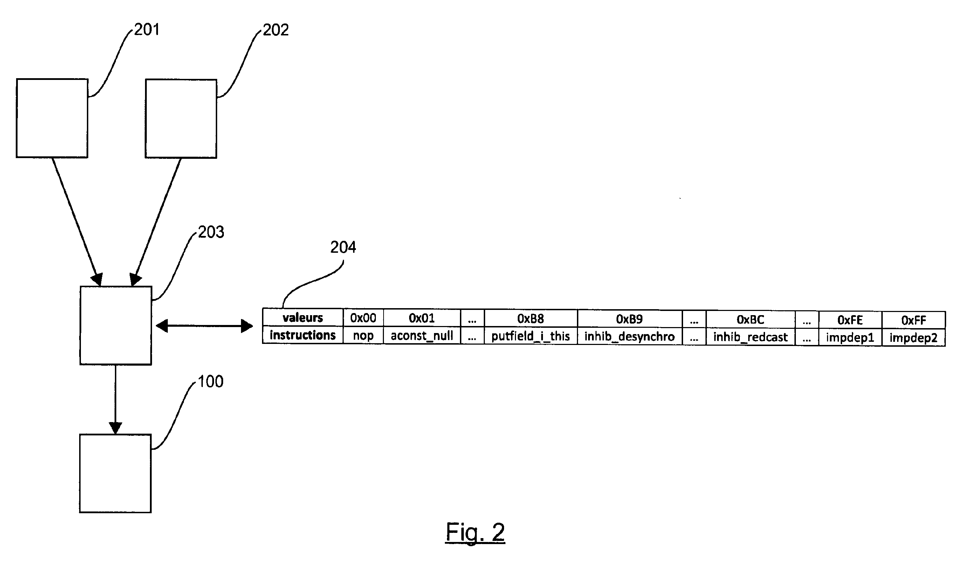

La figure 2 présente, de manière schématique, un mode de réalisation de l'invention appliquée au contexte Java Card.

Dans ce mode de réalisation, le microcontrôleur 100 comprend une machine virtuelle Java Card 203 qui est capable d'interpréter des programmes 201 et 202 compilés sous forme de bytecode Java Card (de tels programmes peuvent être notamment des applets). Chaque instruction correspond donc à une valeur sur 8 bits qui la représente : un bytecode.

De manière classique, chaque instruction du bytecode est lue, décodée puis traduite en langage machine par la machine virtuelle Java Card afin d'être exécuté par le microcontrôleur 100.

Il convient de noter qu'il n'y a que 204 bytecodes différents qui sont actuellement standardisés dans le cadre de la machine virtuelle (VM) Java (cf. par exemple http://en.wikipedia.org/wiki/Java_bytecode_instruction_listings), contre seulement 186 dans le cadre de la machine virtuelle Java Card, et que ces bytecodes sont représentés sur un octet.

Ainsi, dans un mode de réalisation de l'invention, la machine virtuelle 203 Java Card possède une table de correspondance 204 comprenant notamment une correspondance entre des bytecodes non standardisés et des instructions spécifiques (implémentant une contre-mesure sécuritaire).

Tant qu'un dispositif de détection n'a pas détecté une attaque par injection de fautes, de tels bytecodes ne sont pas exécutés (en effet, la machine virtuelle conditionne le décodage de tels bytecodes à la valeur d'un paramètre qui est géré par le dispositif de détection).

Ainsi, dès qu'une attaque est détectée, l'exécution de ces bytecodes est désinhibée (via la modification du paramètre géré par le dispositif de détection), et la sécurité supplémentaire devient effective, pour toutes les exécutions suivantes.

Par exemple, de tels bytecodes « supplémentaires » sont des bytecodes implémentant des contre-mesures typiques comme :
- Inhib_desynchro, qui implémente une fonction de désynchronisation ;
- Inhib_appcrc, qui vérifie l'intégrité du code de l'applet ;
- Inhib_redif qui exécute un contrôle redondant d'une instruction if;
- Inhib_redcast qui exécute une instruction instanceof redondante pour vérifier le type d'un objet.

Il convient de remarquer que tant qu'une attaque n'a pas été détectée, le temps d'exécution d'une applet utilisant cette technique est quasiment la même qu'une applet non sécurisée.

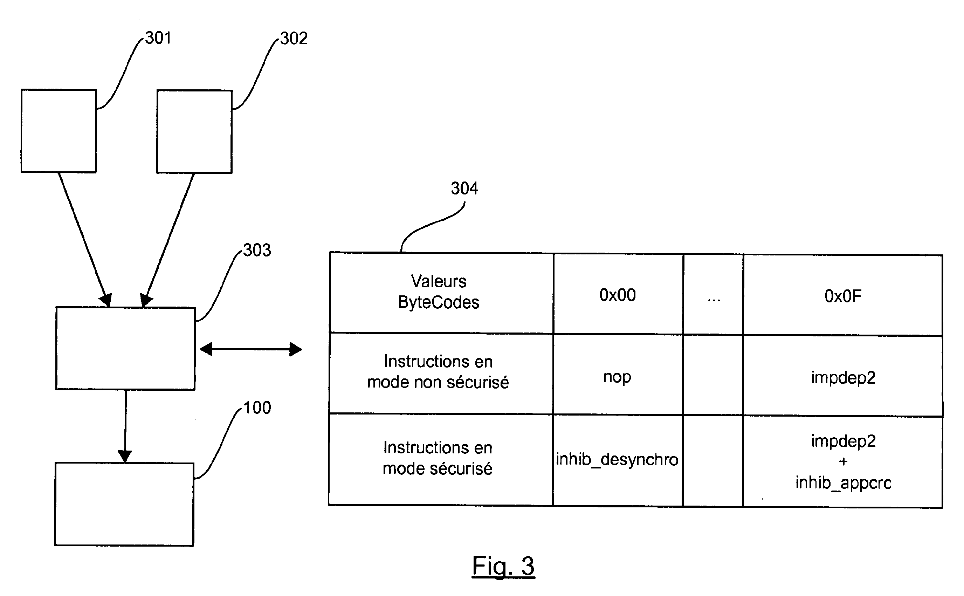

La figure 3 présente, de manière schématique, un mode de réalisation de l'invention appliquée au contexte Java Card.

Dans ce mode de réalisation, le microcontrôleur 100 comprend une machine virtuelle Java Card 304 qui est capable d'interpréter des programmes 201 et 202 compilés sous forme de bytecodes Java Card.

Cependant, au lieu d'avoir une seule implémentation pour chaque bytecode, comme présenté dans la description de la figure 2, la machine virtuelle 303 Java Card possède une table de correspondance 304 comprenant notamment une correspondance entre un bytecode et deux versions différentes d'instructions (l'une sécurisée et l'autre non sécurisée).

Dans un autre mode de réalisation, seuls les bytecodes étant sujets aux attaques par perturbation (ifeq, ifne, sipush, etc....) comprennent deux versions.

Ainsi, tant qu'aucune attaque n'est détectée par un dispositif de détection, la machine virtuelle 303 exécute les versions « classiques » (i.e non-sécurisées) des bytecodes. Mais, dès qu'une attaque est détectée par un dispositif de détection, la machine virtuelle 303 exécute alors les versions des instructions du mode sécurisé des bytecodes correspondants.

Ainsi, dans ce mode de réalisation, tant qu'une attaque n'a pas été détectée, le temps d'exécution de l'applet est quasiment la même qu'une applet non sécurisée. De plus, la taille d'une applet est équivalente à celle d'une applet non sécurisée. Par ailleurs, l'applet est complètement standard et peut être portée sur n'importe quelle plateforme.

Dans un autre mode de réalisation, une machine virtuelle possède une table de correspondance entre des bytecodes et des instructions combinant les enseignements des techniques divulguées dans les figures 2 et 3.

Dans un autre mode de réalisation de l'invention, un composant électronique comprend une machine virtuelle (ou p machine) permettant d'interpréter un code intermédiaire (correspondant à des p-codes, ou des bytecodes, ou encore des codes objets). Ainsi, l'Homme du métier pourra appliquer la présente technique à des composant électronique compatibles avec l'utilisation de programmes informatiques écrits en un langage interprété.

## Revendications

1. Procédé de gestion, mis en oeuvre dans un composant électronique (100), de codes associés à des contremesures sécuritaires, **caractérisé en ce qu'**à au moins un code correspondent deux versions différentes d'instructions et **en ce qu'**une exécution dudit code (204; 304) est réalisée de manière dynamique par l'exécution de l'une ou l'autre des deux versions en fonction d'au moins un paramètre lié à une détection d'au moins une attaque par un dispositif de détection (115).

2. Procédé selon la revendication 1, **caractérisé en ce que** ledit paramètre est compris dans une mémoire non-volatile, et **en ce que** ledit composant vérifie régulièrement un état dudit paramètre.

3. Procédé selon l'une quelconque des revendications 1 et 2, **caractérisé en ce que** lesdits codes associés à des contremesures sécuritaires sont classifiées en une pluralité de groupes, chaque groupe étant associé à un niveau de sécurité permettant de hiérarchiser lesdits groupes les uns par rapport aux autres.

4. Procédé selon la revendication 3, **caractérisé en ce qu'**une exécution des codes compris dans un groupe possédant le niveau de sécurité le plus faible est toujours mise en oeuvre par ledit composant électronique.

5. Procédé selon l'une quelconque des revendications 3 et 4, **caractérisé en ce qu'**une exécution desdits codes compris dans un groupe d'un niveau de sécurité donné est mise en oeuvre en fonction du nombre d'attaques détectées par ledit dispositif de détection.

6. Procédé selon l'une quelconque des revendications 3 à 5, **caractérisé en ce qu'**une exécution desdits codes est réalisée de manière crescendo par rapport aux niveaux de sécurité, en fonction d'un nombre d'attaques détectées.

7. Procédé selon l'une quelconque des revendications 1 à 6, **caractérisé en ce que** ledit procédé est mis en oeuvre par une machine virtuelle (203 ; 303) comprise dans ledit composant électronique, et **en ce que** lesdits codes correspondent à des instructions (204) associées à des codes intermédiaires spécifiques, non standards.

8. Procédé selon l'une quelconque des revendications 1 à 7, **caractérisé en ce que** ledit procédé est mis en oeuvre par une machine virtuelle comprise dans ledit composant électronique, et **en ce que** lesdits codes correspondent à des instructions (304) sécurisées associées à des codes intermédiaires standards.

9. Procédé selon l'une quelconque des revendications 7 et 8, **caractérisé en ce que** lesdits codes intermédiaires appartiennent au groupe comprenant :
- des p-codes ;
- des bytecodes ; et
- des codes objets.

10. Procédé selon l'une quelconque des revendications 1 à 9, **caractérisé en ce que** lesdits codes sont inhibés par défaut par des balises.

11. Procédé selon l'une quelconque des revendications 1 à 10, **caractérisé en ce que** ledit dispositif de détection comprend un circuit comprenant des moyens de détection de lumière.

12. Procédé selon l'une quelconque des revendications 1 à 11, **caractérisé en ce que** ledit dispositif de détection comprend un circuit comprenant des moyens de détection de variation de température.

13. Procédé selon l'une quelconque des revendications 1 à 12, **caractérisé en ce que** ledit dispositif de détection comprend un circuit comprenant des moyens de détection de variation d'une fréquence d'une horloge.

14. Procédé selon l'une quelconque des revendications 1 à 13, **caractérisé en ce que** ledit dispositif de détection comprend un circuit comprenant des moyens de contrôle du flux d'exécution de codes sur ledit composant électronique.

15. Produit programme d'ordinateur, comprenant des instructions de code de programme pour la mise en oeuvre du procédé selon au moins une des revendications 1 à 14 lorsque ledit programme est exécuté sur un ordinateur.

16. Dispositif de gestion de codes associés à des contremesures sécuritaires, **caractérisé en ce qu'**une exécution d'au moins un desdits codes, auquel correspondent deux versions différentes d'instructions, est réalisée de manière dynamique par l'exécution de l'une ou l'autre des deux versions en fonction d'au moins un paramètre lié à une détection d'au moins une attaque par un dispositif de détection.

## Patentansprüche

1. In einem elektronischen Bauteil (100) eingesetztes Verwaltungsverfahren für mit Sicherheits-Gegenmaßnahmen assoziierte Codes, **dadurch gekennzeichnet, dass** mindestens einem Code zwei verschiedene Anleitungsversionen entsprechen und dadurch, dass eine Ausführung des Codes (204; 304) durch Ausführung der einen oder der anderen der zwei Versionen auf dynamische Weise erfolgt und zwar in Abhängigkeit von mindestens einem Parameter, der mit einer Detektion von mindestens einem Angriff durch eine Detektionsvorrichtung (115) in Verbindung steht.

2. Verfahren nach Anspruch 1, **dadurch gekennzeichnet, dass** der Parameter in einem nichtflüchtigen Arbeitsspeicher enthalten ist, und dadurch, dass das Bauteil regelmäßig einen Status dieses Parameters überprüft.

3. Verfahren nach einem der Ansprüche 1 und 2, **dadurch gekennzeichnet, dass** die den Sicherheits-Gegenmaßnahmen assoziierten Codes in einer Vielzahl von Gruppen in Klassen eingeteilt sind, wobei jede Gruppe einem Sicherheitslevel zugeordnet ist, wodurch zwischen den Gruppen eine Hierarchie erstellt werden kann.

4. Verfahren nach Anspruch 3, **dadurch gekennzeichnet, dass** eine Ausführung der in einer Gruppe mit dem niedrigsten Sicherheitslevel enthaltenen Codes von dem elektronischen Bauteil immer operativ umgesetzt wird.

5. Verfahren nach einem der Ansprüche 3 und 4, **dadurch gekennzeichnet, dass** eine Ausführung der in einer Gruppe mit einem gegebenen Sicherheitslevel enthaltenen Codes in Abhängigkeit der von der Detektionsvorrichtung erkannten Anzahl von Angriffen operativ umgesetzt wird.

6. Verfahren nach einem der Ansprüche 3 bis 5, **dadurch gekennzeichnet, dass** eine Ausführung der Codes in Bezug zu den Sicherheitslevels in Abhängigkeit einer Anzahl von erkannten Angriffen in zunehmender Weise erfolgt.

7. Verfahren nach einem der Ansprüche 1 bis 6, **dadurch gekennzeichnet, dass** das Verfahren von einer im elektronischen Bauteil enthaltenen virtuellen Maschine (203; 303) operativ umgesetzt wird, und dadurch, dass die Codes Anweisungen (204) entsprechen, die spezifischen, nicht standardmäßigen Zwischencodes zugeordnet sind.

8. Verfahren nach einem der Ansprüche 1 bis 7, **dadurch gekennzeichnet, dass** das Verfahren von einer im elektronischen Bauteil enthaltenen virtuellen Maschine operativ umgesetzt wird, und dadurch, dass die Codes gesicherten Anweisungen (304) entsprechen, die standardmäßigen Zwischencodes zugeordnet sind.

9. Verfahren nach einem der Ansprüche 7 und 8, **dadurch gekennzeichnet, dass** die Zwischencodes einer Gruppe angehören, die umfasst:
- p-Codes
- Bytecodes und
- Gegenstandscodes.

10. Verfahren nach einem der Ansprüche 1 bis 9, **dadurch gekennzeichnet, dass** diese Codes defaultmäßig durch Tags gesperrt werden.

11. Verfahren nach einem der Ansprüche 1 bis 10, **dadurch gekennzeichnet, dass** die Detektionsvorrichtung eine Schaltung mit Mitteln zur Lichtdetektion umfasst.

12. Verfahren nach einem der Ansprüche 1 bis 11, **dadurch gekennzeichnet, dass** die Detektionsvorrichtung eine Schaltung mit Mitteln zur Detektion von Temperaturschwankungen umfasst.

13. Verfahren nach einem der Ansprüche 1 bis 12, **dadurch gekennzeichnet, dass** die Detektionsvorrichtung eine Schaltung mit Mitteln zur Detektion von Taktzeitvariationen umfasst.

14. Verfahren nach einem der Ansprüche 1 bis 13, **dadurch gekennzeichnet, dass** die Detektionsvorrichtung eine Schaltung mit Kontrollmitteln des Ausführungsflusses von Codes auf dem elektronischen Bauteil umfasst.

15. Computerprogrammprodukt mit Programmcodeanweisungen für die Umsetzung des Verfahrens nach mindestens einem der Ansprüche 1 bis 14, wenn das Programm auf einem Computer ausgeführt wird.

16. Vorrichtung zur Verwaltung von mit Sicherheits-Gegenmaßnahmen assoziierten Codes, **dadurch gekennzeichnet, dass** eine Ausführung von mindestens einem dieser Codes, dem zwei verschiedene Versionen von Anweisungen entsprechen, durch die Ausführung der einen oder der anderen der zwei Versionen auf dynamische Weise erfolgt und zwar in Abhängigkeit von mindestens einem Parameter, der mit einer Detektion von mindestens einem Angriff durch eine Detektionsvorrichtung in Verbindung steht.

## Claims

1. A method, implemented in an electronic component (100), of managing codes associated with security countermeasures, the method being **characterized in that** two different versions of instructions correspond to at least one code and **in that** said code (204; 304) is executed dynamically by executing one or the other of the two versions as a function of at least one parameter associated with a detector device (115) detecting at least one attack.

2. A method according to claim 1, **characterized in that** said parameter is included in a non-volatile memory, and **in that** said component regularly verifies a state of said parameter.

3. A method according to claim 1 or claim 2, **characterized in that** said codes associated with security countermeasures are classified among a plurality of groups, each group being associated with a respective security level suitable for organizing said groups hierarchically relative to one another.

4. A method according to claim 3, **characterized in that** said electronic component always executes codes belonging to a group possessing the lowest security level.

5. A method according to claim 3 or claim 4, **characterized in that** said codes included in a group of given security level are executed as a function of the number of attacks detected by said detector device.

6. A method according to any one of claims 3 to 5, **characterized in that** said codes are executed in crescendo manner relative to the security levels as a function of a number of attacks that have been detected.

7. A method according to any one of claims 1 to 6, **characterized in that** said method is performed by a virtual machine (203; 303) included in said electronic component, and **in that** said codes correspond to instructions (204) associated with specific intermediate codes that are not standard.

8. A method according to any one of claims 1 to 7, **characterized in that** said method is performed by a virtual machine included in said electronic component, and **in that** said codes correspond to secure instructions (304) associated with intermediate codes that are standard.

9. A method according to claim 7 or claim 8, **characterized in that** said intermediate codes belong to the group comprising:
• p codes;
• byte codes; and
• object codes.

10. A method according to any one of claims 1 to 9, **characterized in that** said codes are inhibited by default by tags.

11. A method according to any one of claims 1 to 10, **characterized in that** said detector device comprises a circuit comprising means for detecting light.

12. A method according to any one of claims 1 to 11, **characterized in that** said detector device comprises a circuit comprising means for detecting temperature variation.

13. A method according to any one of claims 1 to 12, **characterized in that** said detector device comprises a circuit comprising means for detecting variation in a clock frequency.

14. A method according to any one of claims 1 to 13, **characterized in that** said detector device comprises a circuit comprising means for monitoring the code execution stream on said electronic component.

15. A computer program product including program code instructions for performing the method according to at least one of claims 1 to 14 when said program is executed on a computer.

16. A device for managing codes associated with security countermeasures, the device being **characterized in that** at least one of said codes, having two different versions of instructions corresponding thereto, is executed dynamically by executing one or the other of the two versions as a function of at least one parameter associated with a detector device detecting at least one attack.
